# EUROPÄISCHE PATENTSCHRIFT

(11) **EP 3 577 014 B1**
(45) Veröffentlichungstag und Bekanntmachung des Hinweises auf die Patenterteilung: **24.03.2021**
(21) Anmeldenummer: 18704913.5
(22) Anmeldetag: 01.02.2018
(51) Int. Cl.: B62D 27/02, B62D 27/06

(54) **TRAGSTRUKTUR FÜR FAHRZEUGE UND/ODER BAUWERKE**
SUPPORT STRUCTURE FOR VEHICLES AND/OR CONSTRUCTIONS
STRUCTURE DE SUPPORT POUR VÉHICULES ET/OU OUVRAGES

(30) Priorität: 02.02.2017 DE 102017102070
(43) Veröffentlichungstag der Anmeldung: 11.12.2019
(73) Patentinhaber: 3 PMAN GmbH, 8010 Stainz (AT)
(72) Erfinder: POLLICH, Sebastian, 73732 Esslingen (DE)
(74) Vertreter: Bergmeier, Ulrich
(86) Internationale Anmeldenummer: PCT/EP2018/052472
(87) Internationale Veröffentlichungsnummer: WO 2018/141827

(56) Entgegenhaltungen:
- DE-A1- 3 541 325
- DE-A1- 10 015 328
- DE-B3-102013 011 203

## Beschreibung

Die vorliegende Erfindung betrifft eine Tragstruktur für Fahrzeuge, insbesondere Kraft- und/oder Luftfahrzeuge, und/oder Bauwerke, insbesondere Brücken und/oder Gebäude, mit wenigstens zwei Tragteilen, die entlang einer Verbindungsachse formschlüssig ineinandergesteckt sind, wobei eines der beiden Tragteile eine Aussparung mit einer Öffnung und das andere Tragteil einen in die Aussparung eingesteckten Komplementärbereich aufweist.

Aus dem Stand der Technik sind insbesondere Tragstrukturen für Fahrzeuge hinlänglich bekannt. Derartige Tragstrukturen sind üblicherweise aus Metall oder einem Faserverbund hergestellt, wobei die einzelnen Bauteile der Tragstruktur miteinander verschweißt, geklebt oder genietet sind. Neben der teuren Herstellung solcher Tragstrukturen gestalten sich auch etwaige notwenige Reparaturen äußerst aufwendig, da die Bauteile zumeist unlösbar miteinander verbunden sind.

Aus der DE 298 18 807 U1 ist eine Fahrzeugkarosserie bekannt, deren rohr- oder knotenförmige Bauteile über eine Steckverbindung und eine Festverbindung miteinander verbindbar sind, wobei die Steckverbindung als nicht oder nur schwer lösbare Befestigung ausgebildet ist. Ferner offenbaren die DE 10 2013 011 203 B3, DE 34 06 550 A1, DE 37 40 402 A1 und DE 35 28 818 A1 Systeme um zwei Bauteile formschlüssig miteinander zu verbinden, wobei diese jeweils aneinander gezogen werden. Vergleichbare Tragstrukturen sind auch in der DE 35 41 325 A1 und DE 100 15 328 A1 offenbart.

Aufgabe der vorliegenden Erfindung ist es somit, eine stabile Tragstruktur zu schaffen, die kostengünstig repariert und/oder deren Ausgestaltung schnell und einfach angepasst werden kann.

Die der Erfindung zugrundeliegende Aufgabe wird durch die Merkmale des unabhängigen Patentanspruchs gelöst. Weitere vorteilhafte Ausgestaltungen ergeben sich aus den Unteransprüchen und den Zeichnungen.

Vorgeschlagen wird eine Tragstruktur mit wenigstens zwei Tragteilen. Die Tragstruktur ist insbesondere für Fahrzeuge, insbesondere Kraft- und/oder Luftfahrzeuge, und/oder Bauwerke, insbesondere Brücken und/oder Gebäude vorgesehen. Die Tragstruktur ist vorzugsweise eine Fahrzeugtragstruktur und/oder eine Bauwerktragstruktur. Die beiden Tragteile sind entlang einer Verbindungsachse formschlüssig ineinander gesteckt. Eines der beiden Tragteile weist eine Aussparung mit einer Öffnung auf. Das andere Tragteil weist einen in die Aussparung eingesteckten Komplementärbereich auf. Die Tragstruktur weist ein Verbindungssystem auf, welches zumindest die beiden Tragteile lösbar miteinander verbindet. Das Verbindungssystem übt auf zumindest eines der beiden Tragteile in Richtung der Verbindungsrichtung eine Zug- und/oder Druckkraft aus, so dass die beiden Tragteile in einem gemeinsamen Druckbereich aneinandergedrückt sind.

Die Tragstruktur weist hierbei vorzugsweise ein oder mehrere Tragteil-Paare auf, welche jeweils durch das Verbindungssystem auf Zug oder Druck miteinander verbunden sind. Die Tragstruktur ist vorzugsweise durch die Zugkraft und die Druckkraft miteinander verbunden, wobei die Tragteile derart gegeneinander verspannt sind, dass sie sich durch die vorzugsweise in entgegengesetzte Richtungen wirkenden Druck- und Zugkräfte nicht voneinander lösen können. Das eine Tragteil wird folglich entweder in das andere Tragteil gezogen oder in dieses gedrückt. Ebenso sind Kombinationen mehrerer Tragteil-Paare denkbar. Die formschlüssige Verbindung der beiden Tragteile wird durch das lösbare Verbindungssystem vorzugsweise derart fixiert, dass eine stabile und selbsttragende Tragstruktur ausgebildet ist, die jedoch bei Bedarf in ihre Einzelteile zerlegbar ist. Für den Einsatz in der Automobil- und/oder Baubranche weist die Tragstruktur somit die notwendige Stabilität und Sicherheit auf. Ferner können beschädigte Tragteile schnell und kostengünstig ausgetauscht werden.

Zur Herstellung der Tragstruktur müssen die einzelnen Tragteile jeweils lediglich ineinander gesteckt und durch das Verbindungssystem ineinander gesichert werden. Da dies im Wesentlichen ausschließlich durch das vorzugsweise form- und kraftschlüssige Verbindungssystem erfolgt, gestaltet sich die Produktion der Tragstruktur als einfach und kostengünstig. Es sei angemerkt, dass einzelne Teile der Tragstruktur weiterhin stoffschlüssig miteinander verbunden sein können. Etwaige notwendige Wartungsarbeiten eines Kraftfahrzeuges und/oder eines Bauwerks können durch die erfindungsgemäße Tragstruktur vereinfacht erfolgen, da die Tragteile durch das Verbindungssystem leicht voneinander gelöst und auch wieder zusammengebaut werden können.

Das Verbindungssystem weist ein in Richtung einer zweiten Verbindungsachse wirkendes Druckelement auf. Das Druckelement ist zumindest teilweise an einem dritten Tragteil angeordnet. Gegen das Druckelement drückt ein feststehendes viertes Tragteil der Tragstruktur, so dass diese eine lösbar verbundene Druckeinheit bilden. Die zweite Verbindungsachse ist vorzugsweise zu der Längsachse des mit dem vierten Tragteil formschlüssig verbundenen dritten Tragteils koaxial. Das vierte Tragteil ist vorzugsweise verankert, so dass es der von dem Druckelement erzeugten Druckkraft entgegen wirken kann, um den Druckbereich auszubilden. Das dritte Tragteil wird von dem Druckelement in das vierte Tragteil gedrückt.

Von Vorteil ist es, wenn das Verbindungssystem zumindest eine in Richtung einer ersten Verbindungsachse wirkende Zugeinheit aufweist. Die Zugeinheit zieht ein erstes und ein zweites Tragteil der Tragstruktur ineinander, so dass diese eine in sich lösbar verbundene Einheit bilden. Der Komplementärbereich des ersten Tragteils ist in der Aussparung des zweiten Tragteils angeordnet. Die erste Verbindungsachse verläuft entlang einer Längsachse der miteinander verbundenen Tragteile. Um die beiden Tragteile gegeneinander zu verspannen, wird auf das erste Tragteil eine Zugkraft ausgeübt, so dass der Komplementärbereich in die Aussparung gezogen wird. Zwischen der Aussparung und dem Komplementärbereich ist hierdurch der die Tragteile zusammenhaltende Druckbereich ausgebildet. Das zweite Tragteil wird durch die Zugeinheit vorzugsweise in seiner Position gehalten, so dass das erste Tragteil gegenüber diesem verspannt werden kann. Die Zugeinheit ist ein in sich verspanntes System.

Der Komplementärbereich und die Aussparung der Zugeinheit sind zumindest in einem Abschnitt pyramidenstumpfförmig ausgebildet.

Vorteilhaft ist es, wenn der Druckbereich wenigstens zwischen einer ersten Anschlagsfläche des einen Tragteils und einer zweiten Anschlagsfläche des anderen Tragteils ausgebildet ist. Der Komplementärbereich weist dabei vorzugweise die erste Anschlagsfläche und/oder die Aussparung vorzugsweise die zweite Anschlagsfläche auf. Die beiden Anschlagsflächen bilden vorzugsweise die Flächen aus, welche unter Ausbildung des Druckbereichs bündig aneinander gepresst werden. Hierzu sind die beiden Anschlagsflächen vorzugsweise zueinander korrespondierend ausgebildet. Zur sicheren Verbindung der beiden Tragteile miteinander ist prinzipiell ein flächiger Druckbereich zu bevorzugen. Grundsätzlich kann der Druckbereich ebenso auch punktuell ausgebildet werden, wobei die beiden Anschlagsflächen sodann Anschlagspunkte darstellen.

Einen weiteren Vorteil stellt es dar, wenn die beiden miteinander korrespondierenden Anschlagsflächen im Längsschnitt schräg zur Verbindungsachse verlaufen. Der Komplementärbereich und/oder die Aussparung sind zumindest in einem Abschnitt vorzugsweise konisch, kegelstumpfförmig und/oder pyramidenstumpfförmig ausgebildet. Die Verbindungsachse erstreckt sich vorzugsweise jeweils längs durch die formschlüssig miteinander verbundenen Bauteile hindurch. Wenn die beiden Anschlagsflächen vorzugsweise schräg hierzu verlaufen, ist der Druckbereich möglichst groß ausgebildet. Weiterhin ermöglichen die beschriebenen Geometrien eine stabile formschlüssige Verbindung beider Tragteile, da der Druckbereich hierdurch vergrößert ist. Um die beiden Tragteile durch Zugkraft miteinander zu verbinden, sind der Komplementärbereich und die Aussparung vorzugsweise derart ausgebildet, dass die beiden Tragteile drehfest zueinander angeordnet sind. Hingegen sind bei einem auf Druck wirkenden Verbindungssystem Anschlagsflächen zu wählen, durch welche die beiden Tragteile zueinander verdrehbar sind.

Weiterhin ist es vorteilhaft, wenn das Zugelement eine sich in Richtung der ersten Verbindungsachse erstreckende Zugstange ist, die an einem ihrer beiden Enden einen am ersten Tragteil anliegenden Kopf und am anderen Ende eine angeschraubte und am zweiten Tragteil anliegende Mutter aufweist. Der Kopf ist vorzugsweise komplementär zu dem Komplementärbereich und zur Aussparung ausgebildet. Der hohle Komplementärbereich ist vorzugsweise zwischen dem Kopf und der Aussparung angeordnet. Die Zugstange erstreckt sich vorzugsweise zumindest teilweise durch das Tragteil hindurch. Die Mutter ist innerhalb oder außerhalb des Tragteils angeordnet. Nachdem die Tragteile formschlüssig miteinander verbunden sind, wird vorzugsweise der Kopf der Zugstange in dem Komplementärbereich angeordnet. Die Zugstange wird vorzugsweise durch eine Stangenöffnung des Tragteils gesteckt. Anschließend wird die Mutter auf die Zugstange geschraubt, wobei die Zugstange vorzugsweise ihrem für die Mutter vorgesehenen Bereich ein mit der Mutter korrespondierendes Gewinde aufweist. Wenn die Mutter angezogen wird, wirkt durch die Zugstange auf den Kopf eine Zugkraft. Durch diese Zugkraft werden der Kopf in den Komplementärbereich und somit auch der Komplementärbereich in die Aussparung gezogen. Der Druckbereich der Zugeinheit wird ausgebildet, indem der Komplementärbereich durch das Anziehen der Mutter in die Aussparung gezogen wird. Vorzugsweise ist die Mutter gesichert. Hierfür ist diese insbesondere mit einer zweiten Mutter gekontert, mit einem Sicherungsblech versehen und/oder das Muttergewinde ovalisiert.

Der Kopf ist vorteilhafterweise im Inneren des ersten Tragteils und/oder an einer Innenseite des Komplementärbereichs und/oder der Aussparung angeordnet ist. Alternativ oder ergänzend ist es von Vorteil, wenn der Kopf eine im Längsschnitt eine zum Druckbereich komplementäre, insbesondere konische, Form aufweist. Der Kopf fügt sich vorzugsweise formschlüssig in den in der Aussparung angeordneten Komplementärbereich ein. Der Komplementärbereich ist vorzugsweise hohl ausgebildet, so dass der Kopf an einer Innenseite des Komplementärbereichs an diesem anliegt. Auf seiner dem Kopf gegenüberliegenden Seite bildet der Komplementärbereich gemeinsam mit der Aussparung den Druckbereich aus.

Es stellt einen Vorteil dar, wenn die Mutter im Inneren des zweiten Tragteils angeordnet ist und/oder an einer, insbesondere zur ersten Verbindungsachse lotrechten oder im Querschnitt konischen, Stützwand anliegt. Vorteilhafterweise ist zwischen der Mutter und der Stützwand ein weiteres Tragteil verspannt. Die Mutter wird gegenüber dem zweiten Tragteil und/oder der Stützwand angezogen, um den Druckbereich zwischen den beiden Anschlagsflächen des Komplementärbereichs und/oder der Aussparung auszubilden. Im Falle einer im Querschnitt konischen Stützwand weist die Mutter vorzugsweise eine komplementäre Form auf. Die Mutter ist demnach ebenfalls konisch ausgebildet. Zwischen der Mutter und der Zwischenwand kann auch ein Adapterelement angeordnet sein, das eine zur Zwischenwand komplementäre Form aufweist.

Es ist von Vorteil, wenn das erste und zweite Tragteil jeweils eine Zugangsöffnung aufweisen, so dass die Zugstange über die eine Zugangsöffnung in das erste Tragteil einführbar und die Mutter über die andere Zugangsöffnung angezogen und/oder gelöst werden kann. Die beiden Zugangsöffnungen werden vorzugsweise verschlossen, nachdem der Druckbereich zwischen dem ersten und zweiten Tragteil ausgebildet ist.

Vorteilhafterweise weist das erste und/oder zweite Tragteil in seinem Inneren zumindest ein Verstärkungselement auf, welches die Aussparung und/oder die Stützwand innenseitig abstützt. In einer Einbauposition der Tragstruktur werden durch das Verstärkungselement Betriebslasten und Lasten aus der Verspannung entsprechend verteilt. Im Falle eines Kraftfahrzeuges werden Beschleunigungs- und Bremskräfte vom Fahrwerk des Kraftfahrzeuges gleichmäßig auf die Tragteile übertragen. Ebenso werden Kräfte, welche auf ein Bauwerk wirken, gleichmäßig über die Tragstruktur verteilt.

Des Weiteren stellt es einen Vorteil dar, wenn das Druckelement eine Schraubverbindung ist. Das dritte Tragteil weist vorzugsweise ein erstes Gewinde, insbesondere ein Außengewinde auf. Ein feststehendes anderes Tragteil, insbesondere die Zugeinheit, weist ein zweites Gewinde, insbesondere ein Innengewinde auf. Das dritte Tragteil ist vorzugsweise in die Zugeinheit eingeschraubt, wobei insbesondere das Außengewinde des dritten Tragteils in das Innengewinde des anderen Tragteils geschraubt ist. Um das dritte und vierte Tragteil miteinander zu verbinden, wird zunächst das dritte Tragteil durch das zweite Gewinde des zusätzlichen Tragteils gesteckt, bis der Komplementärbereich des dritten Tragteils im Wesentlichen im Bereich der Aussparung des vierten Tragteils angeordnet ist. Das dritte Tragteil weist auf seiner dem Komplementärbereich abgewandten Seite das erste Gewinde auf. Dieses erste Gewinde greift in das zweite Gewinde des zusätzlichen Bauteils, wenn der Komplementärbereich in der Nähe der Aussparung bzw. locker in dieser angeordnet ist. Das dritte Tragteil wird nun gegenüber dem zusätzlichen Tragteil verdreht, insbesondere in dieses geschraubt, so dass der Komplementärbereich in die Aussparung gedrückt wird. Durch die von dem Druckelement, insbesondere der Schraubverbindung, erzeugte Drucckraft wird der Druckbereich zwischen dem Komplementärbereich und der Aussparung ausgebildet. Die Tragteile sind lösbar zu der Druckeinheit verbunden.

Die Aussparung und der Komplementärbereich der Druckeinheit sind vorteilhafterweise rotationssymmetrisch ausgebildet, so dass das dritte Tragteil gegenüber dem feststehenden vierten Tragteil zum lösbaren Verbinden verdrehbar ist. Der Komplementärbereich des dritten Tragteils wird vorzugsweise in die Aussparung des vierten Tragteils gedreht, um den Druckbereich wirksam auszubilden.

Es ist von Vorteil, wenn die Zugeinheit und die Druckeinheit zur Ausbildung der Tragstruktur lösbar miteinander verbunden sind. Alternativ oder ergänzend ist es vorteilhaft, wenn die erste und zweite Verbindungsachse schräg zueinander verlaufen. Die erste Verbindungsachse beschreibt vorzugsweise die Wirkrichtung der Zugkraft. Die zweite Verbindungsachse beschreibt vorzugsweise die Wirkrichtung der Druckkraft. Die Zugkraft und die Druckkraft wirken vorzugsweise in entgegengesetzte Richtungen. Die Zugeinheit und die Druckeinheit sind dabei derart miteinander verbunden, dass die Trageinheit durch die entgegengesetzt wirkenden Druck- und Zugkräfte in sich verspannt ist.

Das zweite Tragteil der Zugeinheit weist vorteilhafterweise ein mit dem Innengewinde ausgebildetes Durchgangsloch auf. Das dritte Tragteil der Druckeinheit ist in das Durchgangsloch geschraubt. Die Zugeinheit, insbesondere das zweite Tragteil, weist vorteilhafterweise einen Koppelabschnitt, insbesondere eine Säule auf. Dieser erstreckt sich vorzugsweise in Einbaulage zur Druckeinheit hin. Der Koppelabschnitt ist mit dem zweiten Tragteil einteilig ausgebildet. Der Koppelabschnitt und das zweite Tragteil können aber auch ebenso zweiteilig ausgebildet sein, wobei der Koppelabschnitt vorzugsweise die zweite Zugangsöffnung des zweiten Tragteils verschließt. Der Koppelabschnitt ist derart angeordnet, dass die Zugeinheit und die Druckeinheit vorzugsweise im Wesentlichen einen geschlossenen Kraftflussring, insbesondere ein Dreieck, ausbilden. Der Koppelabschnitt, insbesondere das zweite Tragteil, weist auf seiner dem Zugelement abgewandten Seite das Durchgangsloch auf. Das dritte Tragteil wird zur Ausbildung des Druckbereichs zwischen diesem und dem vierten Tragteil durch das Durchgangsloch geschraubt. Das vierte Tragteil ist vorzugsweise schräg zur Zugeinheit angeordnet, so dass auch die beiden Verbindungsachsen schräg zueinander verlaufen.

Des Weiteren ist es von Vorteil, wenn das vierte Tragteil der Druckeinheit mittelbar oder unmittelbar durch das erste Tragteil der Zugeinheit festgelegt ist. Das erste und vierte Tragteil ist vorzugsweise einteilig ausgebildet oder in einem Verbindungsbereich lösbar ineinander gesteckt. Das vierte Tragteil ist vorzugsweise durch das erste Tragteil verankert, so dass zwischen dem vierten und dritten Tragteil durch die Druckkraft der Druckbereich ausgebildet werden kann. Die Druckeinheit und die Zugeinheit sind vorzugsweise in dem Verbindungsbereich sowie auch über das Druckelement miteinander verbunden.

Das vierte Tragteil ist vorteilhafterweise über das Druckelement im Verbindungsbereich gegen das erste Tragteil gedrückt. Der Verbindungsbereich ist alternativ oder ergänzend vorteilhafterweise derart ausgebildet, dass das vierte Tragteil gegenüber dem ersten Tragteil drehfest ist. Zur Ausbildung der Tragstruktur werden zunächst die ersten beiden Tragteile formschlüssig miteinander verbunden. Durch die erste Zugangsöffnung wird die Zugstange in den beiden Tragteilen angeordnet, wobei der Kopf an der Innenseite des Komplementärbereichs anliegt. Die Mutter wird über die zweite Zugangsöffnung gegenüber der Stützwand des zweiten Tragteils angezogen, so dass der Kopf in den Komplementärbereich und dieser in die Aussparung gezogen werden. Hierdurch ist der Druckbereich zwischen den beiden Anschlagsflächen und somit die Zugeinheit ausgebildet. Anschließend wird zwischen dem vierten Tragteil und dem ersten Tragteil der Zugeinheit der Verbindungsbereich ausgebildet, indem das der Aussparung gegenüberliegende Ende des vierten Tragteils auf einen Keil des ersten Tragteils gesteckt wird. Nun wird das dritte Tragteil durch die Durchgangsöffnung des zweiten Tragteils gesteckt und geschraubt, bis der Komplementärbereich des dritten Tragteils in der Aussparung des vierten Tragteils angeordnet und zwischen diesen beiden Tragteilen der Druckbereich ausgebildet ist. Die Druckkraft der Druckeinheit und die Zugkraft der Zugeinheit wirken vorzugsweise in entgegengesetzte Richtungen, so dass die Tragteile gegeneinander verspannt sind.

Es stellt einen Vorteil dar, wenn zumindest eines der Tragteile als Hohlbauteil ausgebildet ist. Weiterhin oder alternativ ist es von Vorteil, wenn zumindest eines der Tragteile aus einem isotropen und/oder anisotropen Material, insbesondere Faserkunststoffverbund und/oder Holz, ausgebildet ist. Die Tragteile sind vorzugsweise aus einer Thermoplast-Matrize ausgebildet. Die Herstellung der Tragteile kann hierdurch kostengünstig erfolgen.

Weitere Vorteile der Erfindung sind in den nachfolgenden Ausführungsbeispielen beschrieben. Es zeigt:
- **Figur 1**: eine Schnittdarstellung zweier Tragteile einer Tragstruktur,
- **Figur 2**: eine Schnittdarstellung einer Zugeinheit der Tragstruktur mit den beiden in Figur 1 dargestellten Tragteilen,
- **Figur 3**: ein zweites Ausführungsbeispiel zweier Tragteile der Tragstruktur in einer Schnittdarstellung,
- **Figur 4**: eine Schnittdarstellung einer Druckeinheit der Tragstruktur mit den beiden in Figur 3 dargestellten Tragteilen,
- **Figur 5**: eine Schnittdarstellung der Tragstruktur mit der in Figur 2 dargestellten Zugeinheit und der in Figur 4 dargestellten Druckeinheit,
- **Figur 6**: eine Schnittdarstellung eines zweiten Ausführungsbeispiels der Tragstruktur,
- **Figur 7**: eine Schnittdarstellung eines dritten Ausführungsbeispiels der Tragstruktur und
- **Figur 8**: eine Schnittdarstellung einer Zugeinheit der Tragstruktur gemäß einem zweiten Ausführungsbeispiel.

Bei der Beschreibung der in den Figuren dargestellten Ausführungsbeispiele werden für Merkmale, die im Vergleich zu in anderen Figuren dargestellten Ausführungsbeispielen in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

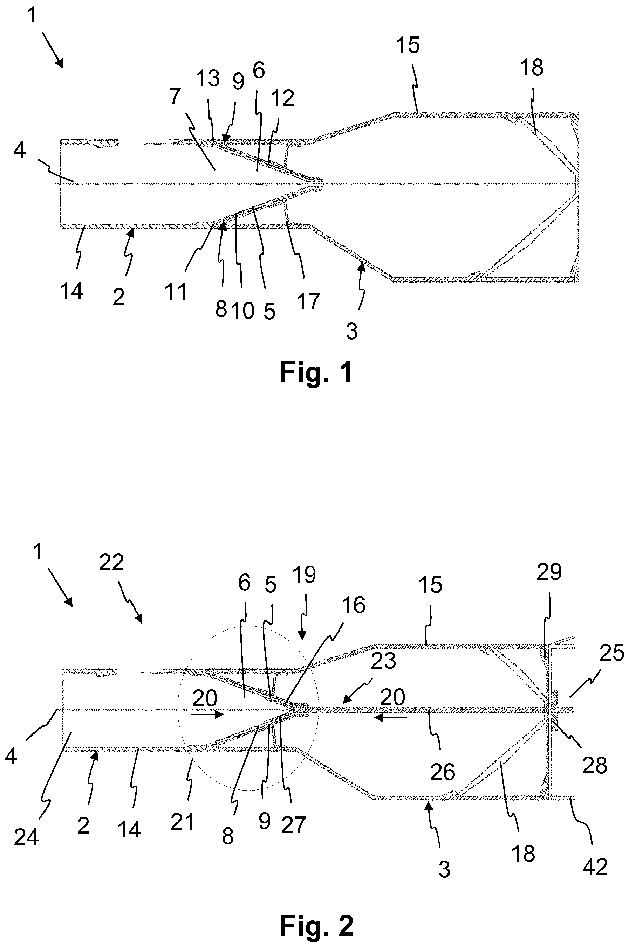

Figur 1 zeigt einen Ausschnitt einer Tragstruktur 1 im Längsschnitt. Die Tragstruktur 1 ist insbesondere für Kraftfahrzeuge und/oder Bauwerke vorgesehen. Die Tragstruktur 1 weist ein erstes Tragteil 2 und ein zweites Tragteil 3 auf, welche entlang einer ersten Verbindungsachse 4 formschlüssig ineinandergesteckt sind. Das erste Tragteil 2 weist einen Komplementärbereich 5 auf. Das zweite Tragteil 3 weist eine Aussparung 6 mit einer Öffnung 7 auf. Der Komplementärbereich 5 ist durch die Öffnung 7 in die Aussparung 6 gesteckt, so dass das erste und zweite Tragteil 2, 3 formschlüssig miteinander verbunden ist. Die Form des Komplementärbereichs 5 ist hierfür komplementär, d.h. passgenau, zur Form der Aussparung 6 ausgebildet.

Das erste Tragteil 2 weist eine erste Anschlagsfläche 8 und das zweite Tragteil 3 eine zweite Anschlagsfläche 9 auf. Die erste Anschlagsfläche 8 ist vorzugsweise von einer ersten Mantelfläche 10 des Komplementärbereichs 5 ausgebildet. Des Weiteren umfasst die erste Anschlagsfläche 8 gemäß dem vorliegenden Ausführungsbeispiel eine erste Tragfläche 11, insbesondere einen Absatz, des ersten Tragteils 2. Die erste Mantelfläche 10 des Komplementärbereiches 5 erstreckt sich von der ersten Tragfläche 11 schräg zulaufend zur ersten Verbindungsachse 4.

Die zweite Anschlagsfläche 9 ist von einer zweiten Mantelfläche 12 der Aussparung 6 ausgebildet. Des Weiteren umfasst diese eine zweite Tragfläche 13, insbesondere einen Absatz, des zweiten Tragteils 3. Die zweite Anschlagsfläche 9 der Aussparung 6 erstreckt sich von einer Außenwand des zweiten Tragteils 3 ausgehend schräg zulaufend zur ersten Verbindungsachse 4 hin.

Der Komplementärbereich 5 und die Aussparung 6 sind zueinander gegenüber der ersten Verbindungsachse 4 drehfest miteinander verbunden. Hierfür sind diese insbesondere pyramidenstumpfförmig ausgebildet. Ebenso könnten der Komplementärbereich 5 und die Aussparung 6 in einem vorliegend nicht dargestellten Ausführungsbeispiel aber auch zylindrisch, konisch oder kegelstumpfförmig ausgebildet sein. Im Falle einer rotationssymmetrischen Form ist es vorteilhaft, wenn zwischen dem Komplementärbereich 5 und der Aussparung 6 eine Verdrehsicherung ausgebildet ist. Diese könnte beispielsweise einen in eine Nut eingreifenden Nocken umfassen. In jedem Fall sind die Aussparung 6 und der Komplementärbereich 5 zueinander korrespondierend ausgebildet.

Die beiden Tragteile 2, 3 sind als Hohlbauteile ausgebildet. Ein erster Tragmantel 14 bildet dabei das erste Tragteil 2 und ein zweiter Tragmantel 15 das zweite Tragteil 3 aus. Die zweite Mantelfläche 12 der Aussparung 6 sowie der zweite Tragmantel 15 sind vorzugsweise einteilig ausgebildet. Die Aussparung 6 erstreckt sich ins Innere des zweiten Tragteils 3 hinein. Zwischen der zweiten Mantelfläche 12 der Aussparung 6 und dem zweiten Tragmantel 15 ist im Inneren des zweiten Tragteils 3 ein erstes Verstärkungselement 17 angeordnet, um die Stabilität des zweiten Tragteils 3 zu erhöhen. Weiterhin ist in dem zweiten Tragteil 3 zumindest ein zweites Verstärkungselement 18 zur Kraftübertragung angeordnet.

Zumindest eines der beiden Tragteile 2, 3 ist vorzugsweise aus einem isotropen oder anisotropen Material hergestellt. Sie können einteilig oder mehrteilig ausgebildet sein. Des Weiteren können diese materialeinheitlich oder aus mehreren unterschiedlichen Materialien ausgebildet sein. Zumindest ein Verstärkungselement 17, 18, insbesondere die ersten Verstärkungselemente 17, von denen nur eines mit einem Bezugszeichen versehen ist, oder das zweite Verstärkungselement 18, werden vorzugsweise nachträglich in dem jeweiligen Tragteil 2, 3 angeordnet und mit diesem form- und/oder stoffschlüssig verbunden.

In dem in Figur 2 dargestellten Ausführungsbeispiel sind die beiden vorstehend in Figur 1 beschriebenen Tragteile 2, 3 lösbar miteinander zu einer Zugeinheit 22 verbunden. Infolgedessen können diese beschädigungsfrei wieder voneinander demontiert werden. Gemäß Figur 2 weist die Tragstruktur 1 hierfür ein Verbindungssystem 19 zur lösbaren Verbindung der beiden Tragteile 2, 3 auf. Das Verbindungssystem 19 übt auf das erste und zweite Tragteil 2, 3 entlang der ersten Verbindungsachse 4 eine Zugkraft 20 aus, so dass die beiden Tragteile 2, 3 in einem Druckbereich 21 aneinander gedrückt werden. Durch das Verbindungssystem 19 werden die beiden Tragteile 2, 3 zu einer Zugeinheit 22 lösbar miteinander verbunden. Hierzu umfasst das Verbindungssystem 19 ein in Richtung der ersten Verbindungachse 4 wirkendes Zugelement 23, welches nachfolgend detailliert beschrieben wird.

Das Zugelement 23 ist vorliegend insbesondere als Zugstange 26 ausgebildet. Zur Montage sowie Demontage des Zugelements 23 weisen die beiden Tragteile 2, 3 jeweils eine Zugangsöffnung 24, 25 auf. Das Zugelement 23 ist im Inneren des ersten und zweiten Tragteils 2, 3, d.h. in einem jeweiligen Hohlraum, angeordnet. Hierzu wird die Zugstange 26 durch die erste Zugangsöffnung 24 des ersten Tragteils 2 gesteckt, so dass ein Kopf 27 der Zugstange 26 im Bereich des Komplementärbereichs 5, insbesondere an einer Innenwand bzw. Innenseite 16 des ersten Tragteils 2, zum Anliegen kommt. Der Kopf 27 ist komplementär, insbesondere pyramidenstumpfförmig oder kegelstumpfförmig, zum Komplementärbereich 5, insbesondere zu der Innenseite 16 des Komplementärbereichs 5, ausgebildet.

Um den Kopf 27 an die Innenseite 16 des Komplementärbereichs 5 zu ziehen, weist die Zugstange 26 eine Mutter 28 auf, welche am anderen Ende der Zugstange 26 aufgeschraubt ist. Die Mutter 28 ist vorzugsweise über die zweite Zugangsöffnung 25 zugänglich angeordnet. Die Zugstange 26 erstreckt sich von dem in der Aussparung 6 angeordneten Komplementärbereich 5 ausgehend in Richtung der zweiten Zugangsöffnung 25 des zweiten Tragteils 3. Das zweite Tragteil 3 weist eine Stützwand 29 auf. Diese ist zwischen der zweiten Zugangsöffnung 25 und der Aussparung 6 des zweiten Tragteils 3 angeordnet und/oder erstreckt sich lotrecht zur ersten Verbindungsachse 4. Die Zugstange 26 erstreckt sich durch die Stützwand 29 hindurch, so dass sich die Mutter 28 an der Stützwand 29 abstützt und den Kopf 27 gegen die Innenseite 16 des ersten Tragteils 2 zieht. Das zweite Verstärkungselement 18 ist vorzugsweise im Inneren des zweiten Tragteils 3 zwischen dem zweiten Tragmantel 15 und der Stützwand 29 angeordnet. Es stützt demnach die Stützwand 29 derart ab, dass ein Teil der Zugkraft 20 aufgenommen wird. Die Stützwand 29 kann mit dem zweiten Tragmantel 15 des zweiten Tragteils 3 einteilig ausgebildet sein. Alternativ kann es sich hierbei aber auch um zwei separate Bauteile handeln. Vorteilhafterweise können somit vor dem Anbringen der Stützwand 29 zunächst die Verstärkungselemente 17, 18 in das Innere des zweiten Tragteils 3 eingebracht werden. Danach wird dann die Stützwand 29 angeordnet. Die Stützwand 29 kann form- und/oder stoffschlüssig mit dem zweiten Tragmantel 15 verbunden sein.

Um die beiden Tragteile 2, 3 miteinander zu verbinden, wird demnach die Mutter 28 der Zugstange 26 angezogen, so dass diese gegenüber der Stützwand 29 verspannt. Die hierdurch ausgebildete Zugkraft 20 wirkt derart, dass der Kopf 27 der Zugstange 26 gegen die Innenseite 16 des Komplementärbereichs 5 gedrückt wird und hierdurch das erste Tragteil 2 in die Aussparung 6 des zweiten Tragteils 3 hineingezogen wird. Die Mutter 28 wird so stark angezogen, dass der Komplementärbereich 5 in die Aussparung 6 gedrückt und der Druckbereich 21 ausgebildet wird. In dem Druckbereich 21 wird die erste Anschlagsfläche 8 des ersten Tragteils 2 gegen die zweite Anschlagsfläche 9 des zweiten Tragteils 3 gedrückt. Die beiden Tragteile 2, 3 sind hierdurch derart gegeneinander verspannt, dass die in sich stabile Zugseinheit 22 ausgebildet ist.

Zwischen der Stützwand 29 und dem Zugelement 23, insbesondere der Mutter 28, kann ein weiteres Tragteil, gemäß Figur 2 ein fünftes Tragteil 42, verspannt und/oder somit lösbar mit dem zweiten Tragteil 3 verbunden sein. Gleiches kann auch im Bereich des gegenüberliegenden Endes des Zugelements 23 der Fall sein. Demnach kann auch in diesem Bereich zwischen dem ersten Tragteil 2 und dem Zugelement 23 ein weiteres Tragteil verspannt sein.

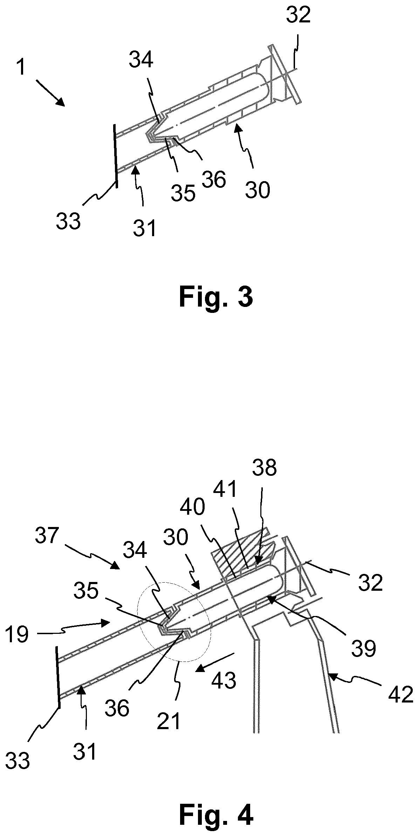

Figur 3 zeigt eine alternative Ausführung und/oder einen anderen Ausschnitt der Tragstruktur 1 im Längsschnitt. Die Tragstruktur 1 weist dabei ein drittes Tragteil 30 und ein viertes Tragteil 31 auf. Die beiden Tragteile 30, 31 sind in Richtung einer zweiten Verbindungachse 32 formschlüssig miteinander verbunden. Das vierte Tragteil 31 ist vorzugsweise feststehend ausgebildet, wobei eine Verankerung 33 des vierten Tragteils 31 lediglich schematisch angedeutet ist. Zur formschlüssigen Verbindung weist das dritte Tragteil 30 einen zweiten Komplementärbereich 34 und das vierte Tragteil 31 eine zweite Aussparung 35 mit einer zweiten Öffnung 36 auf. Der zweite Komplementärbereich 34 sowie die zweite Aussparung 35 sind im Wesentlichen gemäß der vorangegangenen Beschreibung ausgebildet. Vorzugsweise sind der zweite Komplementärbereich 34 und die zweite Aussparung 35 zueinander rotationssymmetrisch ausgebildet, so dass das dritte Tragteil 30 gegenüber dem feststehenden vierten Tragteil 31 um die zweite Verbindungsachse 32 rotiert werden kann.

Figur 4 zeigt einen weiteren Teil des Verbindungssystems 19 zur lösbaren Verbindung der beiden Tragteile 30, 31 unter Ausbildung einer Druckeinheit 37. Hierzu umfasst das Verbindungssystem 19 ein in Richtung der zweiten Verbindungsachse 32 wirkendes Druckelement 38, mittels welchem das dritte Tragteil 30, insbesondere der zweite Komplementärbereich 34, in das vierte Tragteil 31, insbesondere in die zweite Aussparung 35, gedrückt wird. Zwischen den beiden Tragteilen 30, 31 wird hierdurch der Druckbereich 21 ausgebildet.

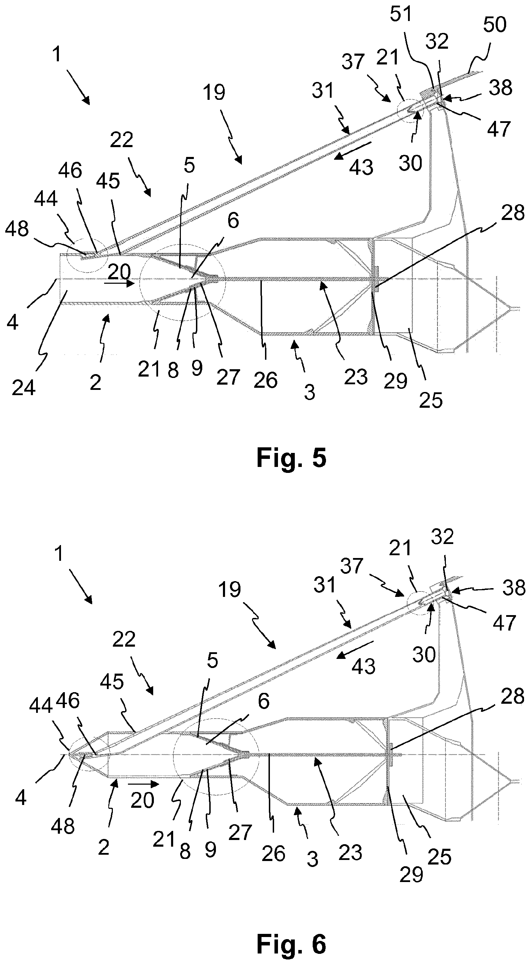

Das Druckelement 38 ist gemäß dem vorliegenden Ausführungsbeispiel eine Schraubverbindung 39, wobei das dritte Tragteil 30 ein erstes Gewinde 40, insbesondere ein Außengewinde, aufweist. Das erste Gewinde 40 ist in ein korrespondierendes zweites Gewinde 41, insbesondere ein Innengewinde, eingeschraubt. Das zweite Gewinde 41 ist in einem feststehenden fünften Tragteil 42 ausgebildet. Zwischen dem fünften Tragteil 42 und dem dritten Tragteil 30 kann, wie in Figur 5 dargestellt, durch die Verschraubung dieser beiden Tragteile 30, 42 ein sechstes Tragteil 50 eingespannt sein. Das sechste Tragteil 50 kann Führungszapfen 51 aufweisen, die in das fünfte Tragteil 42 formschlüssig eingreifen.

Um das dritte und vierte Tragteil 30, 31 unter Ausbildung des Druckbereiches 21 lösbar miteinander zu verbinden, wird zunächst das dritte Tragteil 30, insbesondere dessen zweiter Komplementärbereich 34, durch das zweite Gewinde 41 des fünften Tragteils 42 gesteckt, bis der zweite Komplementärbereich 34 im Wesentlichen im Bereich der zweiten Aussparung 35 des vierten Tragteils 31 angeordnet ist. Kurz bevor sich der zweite Komplementärbereich 34 und die zweite Aussparung 35 berühren, greifen die beiden Gewinde 40, 41 ineinander, so dass das dritte Tragteil 30 im Wesentlichen durch das fünfte Tragteil 42 abgestützt in Richtung des vierten Tragteils 31 geschraubt wird. Das dritte Tragteil 30 wird solange gegenüber dem fünften Tragteil 42 verdreht, bis der zweite Komplementärbereich 34 fest in der zweiten Aussparung 35 des vierten Tragteils 31 angeordnet ist. Das dritte Tragteil 30 wird in Richtung einer Druckkraft 43 entlang der zweiten Verbindungsachse 32 gegen das vierte Tragteil 31 gedrückt. Durch den Druckbereich 21 sind das dritte und vierte Tragteil 30, 31 sicher miteinander verbunden und bilden zusammen die Druckeinheit 37 aus. Um die Druckeinheit 37 zu lösen, muss das dritte Tragteil 30 lediglich aus dem fünften Tragteil 42 hinausgeschraubt werden.

Aus Gründen der Übersichtlichkeit werden in den folgenden Figuren lediglich die wichtigsten Bezugszeichen dargestellt. Zum Verständnis der fehlenden Bezugszeichen wird jeweils auf die vorherigen Figuren verwiesen.

Figur 5 zeigt ein Ausführungsbeispiel der Tragstruktur 1, das sowohl eine Zugeinheit 22 gemäß Figur 2 als auch eine Druckeinheit 37 gemäß Figur 4 aufweist. Die Druckeinheit 37 und die Zugeinheit 22 sind in einem Verbindungsbereich 44 lösbar miteinander verbunden. Der Verbindungsbereich 44 ist zwischen dem vierten Tragteil 31 der Druckeinheit 37 und dem ersten Tragteil 2 der Zugeinheit 22 ausgebildet. Das erste Tragteil 2 weist hierzu eine Keilöffnung 45 zur Aufnahme eines Keilendes 46 des vierten Tragteils 31 auf.

Das zuvor in Figur 4 beschriebene fünfte Tragteil 42 ist in dem dargestellten Ausführungsbeispiel von dem zweiten Tragteil 3 der Zugeinheit 22 ausgebildet. Ebenso ist es jedoch in einem nicht dargestellten Ausführungsbeispiel denkbar, dass das fünfte Tragteil 42 ein separates Bauteil ist, welches unmittelbar oder mittelbar mit dem zweiten Tragteil 3 verbunden wird, um die Druckeinheit 37 mit der Zugeinheit 22 zu verbinden. Das fünfte Tragteil 42 bzw. vorliegend das zweite Tragteil 3 umfasst insbesondere einen Koppelabschnitt, an dessen Ende das Innengewinde ausgebildet ist. Das zweite Tragteil 3 der Zugeinheit weist demnach ein mit dem zweiten Gewinde 41 ausgebildetes Durchgangsloch 47 auf.

Die erste und zweite Verbindungsachse 4, 32 verlaufen schräg zueinander. Um die gesamte Tragstruktur 1 auszubilden, ist es zweckmäßig zunächst das erste und zweite Tragteil 2, 3 mit der Zugeinheit 22 zu verbinden. Hierzu wird der erste Komplementärbereich 5 gemeinsam mit dem Kopf 27 der Zugstange 26 in der ersten Aussparung 6 des zweiten Tragteils 3 angeordnet. Anschließend wird die Zugstange 26 durch die Stützwand 29 des zweiten Tragteils 3 geschoben, so dass die Mutter 28 außerhalb des zweiten Tragteils 2 und/oder auf der Außenseite der Stützwand 29 angeordnet ist. Die Mutter 28 wird durch die zweite Zugangsöffnung 25 hindurch angezogen, um den Druckbereich 21 zwischen den beiden Tragteilen 2, 3 auszubilden. Die Zugeinheit 22 ist hierdurch in sich verspannt und stellt im Wesentlichen eine in sich lösbar verbundene Einheit dar.

Das vierte Tragteil 31 weist auf einer Seite das Keilende 46 und auf der anderen Seite die zweite Aussparung 35 auf. Zur Ausbildung des Verbindungsbereichs 44 wird das Keilende 46 in die Keilöffnung 45 des ersten Tragteils 2 gesteckt. Der Verbindungsbereich 44 bildet demnach die Verankerung 33. Die vorstehende Steckverbindung zwischen dem ersten und vierten Tragteil 2 ,31 wird durch das dritte Tragteil 30 der Druckeinheit 37 gesichert. Hierfür wird das dritte Tragteil 30 durch das Durchgangsloch 47 des zweiten Tragteils 3 der Zugeinheit 22 geschraubt, so dass der zweite Komplementärbereich 34 in die zweite Aussparung 35 gedrückt wird. Die Druckeinheit 37 und die Zugeinheit 22 bilden somit gemeinsam die in Figur 5 dargestellte in sich haltende Tragstruktur 1 aus.

Figur 6 zeigt ein in Bezug auf den Verbindungsbereich 44 alternatives Ausführungsbeispiel der Tragstruktur 1. Demnach ist der Keil 48, nicht wie bei dem in Figur 5 dargestellten Ausführungsbeispiel im Randbereich der Keilöffnung 45 ausgebildet, sondern im Inneren des ersten Tragteils 2. Das Keilende 46 des vierten Tragteils 31 ist demnach durch die Keilöffnung 45 hindurch auf den Keil 48 im Inneren des ersten Tragteils 2 gesteckt. Die Ausbildung der Druckeinheit 37 erfolgt wiederum dadurch, dass das dritte Tragteil 30 in das Durchgangsloch 47 geschraubt wird, bis zwischen dem zweiten Komplementärbereich 34 und der zweiten Aussparung 35 der Druckbereich 21 ausgebildet ist. Wenn die von dem Druckelement 38 erzeugte Druckkraft 43 wirksam ist, wird auch das Keilende 46 des vierten Tragteils 31 fest auf den Keil 48 im Inneren des ersten Tragteils 2 gedrückt.

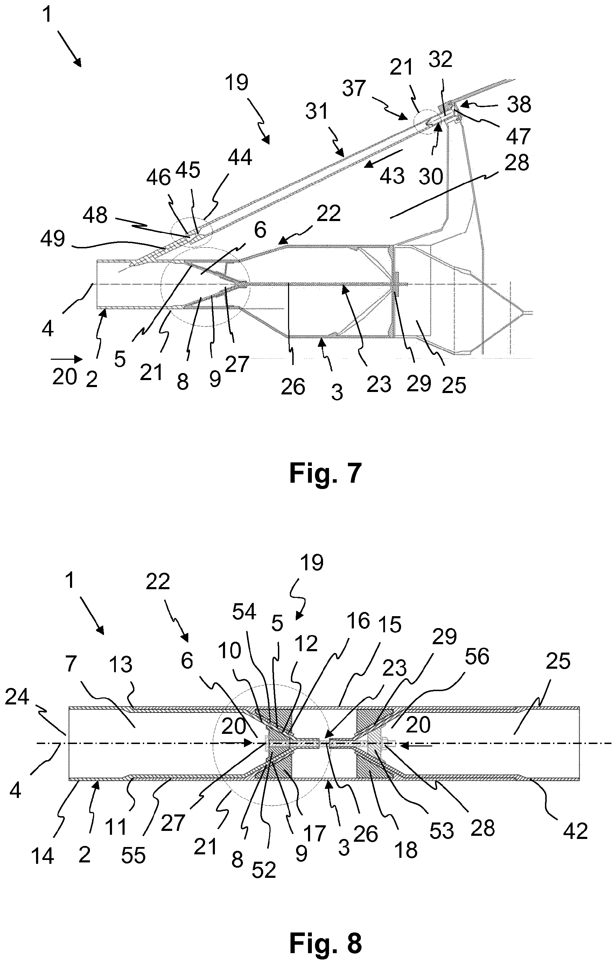

Figur 7 zeigt ein drittes Ausführungsbeispiel der Tragstruktur 1, wobei der Verbindungsbereich 44 außerhalb des ersten Tragteils 2 ausgebildet ist. Das erste Tragteil 2 umfasst einen Stababschnitt 49, an dessen freien Ende der Keil 48 ausgebildet ist. Der Stababschnitt 49 erstreckt sich im Wesentlichen koaxial zur zweiten Verbindungsachse 32. Der Stababschnitt 49 und/oder der Keil 48 sind einteilig mit dem ersten Tragteil 2 ausgebildet. Das erste und zweite Tragteil 2, 3 sind zu der Zugeinheit 22 verbunden. Das dritte Tragteil 30, insbesondere dessen erstes Gewinde 40, ist durch das zweite Gewinde 41 des zweiten Tragteils 3 geschraubt. Das Keilende 46 des vierten Tragteils 31 ist auf den Keil 48 gesteckt, so dass das vierte Tragteil 31 formschlüssig mit dem ersten Tragteil 2 verbunden ist. Das Keilende 46 ist im dargestellten Ausführungsbeispiel als Keilöffnung 45 ausgebildet, welche den Keil 48 formschlüssig aufnimmt. Zuletzt wird der dritte Tragteil 30 eingeschraubt, bis der zweite Komplementärbereich 34 fest in die zweite Aussparung 35 gedrückt ist. In dem jeweiligen Druckbereich 21 werden die Tragteile 2, 3 bzw. 30, 31 jeweils miteinander verbunden. Durch die von dem Druckelement 38 erzeugte Druckkraft 43 wird auch das Keilende 46 fest auf den Keil 48 gedrückt. Zusätzliche Stabilität wird durch die Zugeinheit 22 erzeugt, da der Keil 48 durch die auf das erste Tragteil 2 wirkende Zugkraft 20 in das Keilende 46 gedrückt bzw. gezogen wird. Die Tragstruktur 1 ist durch die Zugeinheit 22 und die Druckeinheit 37 ein in sich verspanntes, stabiles System.

Vorzugsweise ist zumindest eines der Tragteile 2, 3, 30, 31 aus einem isotropen und/oder anisotropen Material, insbesondere einem Faserkunststoffverbund und/oder Holz, ausgebildet.

Figur 8 zeigt im Vergleich zu dem in Figur 1 und 2 dargestellten Ausführungsbeispiel ein weiteres Ausführungsbeispiel der Zugeinheit 22. Bei der nachfolgenden Beschreibung werden für Merkmale, die im Vergleich zu den vorstehenden Ausführungsbeispielen in ihrer Ausgestaltung und/oder Wirkweise identisch oder zumindest vergleichbar sind, gleiche Bezugszeichen verwendet. Sofern diese nicht nochmals detailliert erläutert werden, entspricht deren Ausgestaltung und/oder Wirkweise derjenigen der vorstehend bereits beschriebenen Merkmale.

Im Unterschied zu dem in Figur 1 und 2 dargestellten Ausführungsbeispiel weist der Komplementärbereich 5 neben dem konischen Abschnitt 54 zusätzlich einen zylindrischen Abschnitt 55 auf. Gleiches trifft auf die Aussparung 6 zu. Des Weiteren bilden die beiden Tragteile 2, 3 eine zueinander bündige Außenwandung.

Ferner ist die Stützwand 29 nicht, wie bei dem in Figur 1 und 2 dargestellten Ausführungsbeispiel, als zur ersten Verbindungsachse 4 lotrechte Wand ausgebildet. Stattdessen ist die Stützwand 29 im Querschnitt konisch und/oder konisch zulaufend ausgebildet. Vorzugsweise ist das zweite Tragteil 3 an seinem dem ersten Tragteil 2 abgewandten Ende im Wesentlichen vergleichbar, identisch und/oder spiegelverkehrt zu seinem dem ersten Tragteil 2 zugewandten Ende ausgebildet. Vorzugsweise bildet die Stützwand 29 eine zweite Aussparung 56, die vorzugsweise konisch nach innen hin zuläuft, aus. Diese ist vorzugsweise identisch zur ersten Aussparung 6 ausgebildet. Alternativ kann sich die zweite Aussparung 56 aber auch von der ersten Aussparung 6, insbesondere hinsichtlich Form, Dimensionierung, Maße und/oder Winkel, unterscheiden.

In der zweiten Aussparung 56 ist ein weiteres Tragteil 42 formschlüssig aufgenommen. Das weitere Tragteil 42 kann hierbei das fünfte Tragteil 42 bilden. Vorzugsweise ist das weitere Tragteil 42 zumindest in seinem Komplementärbereich 5 identisch zum ersten Tragteil 2 ausgebildet. Über das Verbindungssystem 19 wird das weitere Tragteil 42 zusätzlich mit dem zweiten Tragteil 3 verspannt. Das zusätzliche Tragteil 42 ist hierbei zwischen der, vorliegend insbesondere konischen, Stützwand 29 und der Zugstange 26, insbesondere deren Mutter 28, verspannt.

Gemäß Figur 8 umfasst das Verbindungssystem 19 ein erstes Adapterelement 52. Dieses ist zwischen dem Kopf 27 und dem ersten Tragteil 2 angeordnet. Das erste Adapterelement 52 weist an seinem dem Kopf 27 abgewandten Ende eine zur anliegenden Wandung des ersten Tragteils 2 korrespondierende Form auf. Vorliegend ist diese Form im Querschnitt konisch ausgebildet. Ferner weist das Verbindungssystem 19 ein zweites Adapterelement 53 auf. Dieses ist zwischen der Mutter 28 und dem zweiten Tragteil 3 angeordnet. Das zweite Adapterelement 53 weist an seinem der Mutter 28 abgewandten Ende eine zur anliegenden Wandung des zweiten Tragteils 3, vorliegend zur Stützwand 29, korrespondierende Form auf. Das zusätzliche Tragteil 42 ist mittels, des Zugelements, insbesondere der Zugstange 26, zwischen dem zweiten Adapterelement 53 und der Stützwand 29 verspannt.

Vorteilhaft ist es, wenn über das Zugelement 23 und/oder Druckelement 38 - wie es bei den vorstehenden Ausführungsbeispielen zumindest zum Teil der Fall ist - unmittelbar oder mittelbar ein zusätzliches Tragteil mit einem der beiden miteinander verbundenen Tragteile, die die Zugeinheit 22 und/oder Druckeinheit 37 ausbilden, verspannt ist.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Tragstruktur
- 2: erstes Tragteil
- 3: zweites Tragteil
- 4: erste Verbindungsachse
- 5: Komplementärbereich
- 6: Aussparung
- 7: Öffnung
- 8: erste Anschlagsfläche
- 9: zweite Anschlagsfläche
- 10: erste Mantelfläche
- 11: erste Tragfläche
- 12: zweite Mantelfläche
- 13: zweite Tragfläche
- 14: erster Tragmantel
- 15: zweiter Tragmantel
- 16: Innenseite
- 17: erstes Verstärkungselement
- 18: zweites Verstärkungselement
- 19: Verbindungssystem
- 20: Zugkraft
- 21: Druckbereich
- 22: Zugeinheit
- 23: Zugelement
- 24: erste Zugangsöffnung
- 25: zweite Zugangsöffnung
- 26: Zugstange
- 27: Kopf
- 28: Mutter
- 29: Stützwand
- 30: drittes Tragteil
- 31: viertes Tragteil
- 32: zweite Verbindungsachse
- 33: Verankerung
- 34: zweiter Komplementärbereich
- 35: zweite Aussparung
- 36: zweite Öffnung
- 37: Druckeinheit
- 38: Druckelement
- 39: Schraubverbindung
- 40: erstes Gewinde
- 41: zweites Gewinde
- 42: fünftes Tragteil
- 43: Druckkraft
- 44: Verbindungsbereich
- 45: Keilöffnung
- 46: Keilende
- 47: Durchgangsloch
- 48: Keil
- 49: Stababschnitt
- 50: sechstes Tragteil
- 51: Führungszapfen
- 52: erstes Adapterelement
- 53: zweites Adapterelement
- 54: konischer Abschnitt
- 55: zylindrischer Abschnitt
- 56: zweite Aussparung

## Patentansprüche

1. Tragstruktur (1) für Fahrzeuge, insbesondere Kraft- und/oder Luftfahrzeuge, und/oder Bauwerke, insbesondere Brücken und/oder Gebäude, mit
wenigstens zwei Tragteilen (2, 3; 30, 31), die entlang einer Verbindungsachse (4, 32) formschlüssig ineinandergesteckt sind,
wobei eines der beiden Tragteile (3, 31) eine Aussparung (6, 35) mit einer Öffnung (7, 36) und das andere Tragteil (2, 30) einen in die Aussparung (6, 35) eingesteckten Komplementärbereich (5, 34) aufweist, und
die Tragstruktur (1) ein Verbindungssystem (19) aufweist, das zumindest die beiden Tragteile (2, 3; 30, 31) lösbar miteinander verbindet,
**dadurch gekennzeichnet,**
**dass** das Verbindungssystem (19) auf zumindest eines der beiden Tragteile (2, 3; 30, 31) in Richtung der Verbindungsachse (4, 32) eine Zug- und/oder Druckkraft (20, 43) ausübt, so dass die beiden Tragteile (2, 3; 30, 31) in einem gemeinsamen Druckbereich (21) aneinandergedrückt sind, und
**dass** das Verbindungssystem (19) zumindest ein in Richtung einer zweiten Verbindungsachse (32) wirkendes Druckelement (38) aufweist, das zumindest teilweise an einem dritten Tragteil (30) angeordnet ist und dieses gegen ein feststehendes viertes Tragteil (31) der Tragstruktur (1) drückt, so dass diese eine lösbar verbundene Druckeinheit (37) bilden,
und/oder
**dass** das Verbindungssystem (19) zumindest ein in Richtung einer ersten Verbindungsachse (4) wirkendes Zugelement (23) aufweist, das ein erstes und zweites Tragteil (2, 3) der Tragstruktur (1) aneinander zieht, so dass diese eine in sich lösbar verbundene Zugeinheit (22) bilden,
wobei der Komplementärbereich (5) und die Aussparung (6) der Zugeinheit (22) zumindest in einem Abschnitt pyramidenstumpfförmig ausgebildet ist.

2. Tragstruktur nach dem vorherigen Anspruch, **dadurch gekennzeichnet, dass** der Druckbereich (21) wenigstens zwischen einer ersten Anschlagsfläche (8) des einen Tragteils (2, 30) und einer zweiten Anschlagsfläche (9) des anderen Tragteils (3, 31) ausgebildet ist, wobei vorzugsweise der Komplementärbereich (5, 34) die erste Anschlagsfläche (8) und/oder die Aussparung (6, 35) die zweite Anschlagsfläche (9) aufweist.

3. Tragstruktur nach dem vorherigen Anspruch 2, **dadurch gekennzeichnet, dass** die beiden miteinander korrespondierenden Anschlagsflächen (8, 9) im Längsschnitt schräg zur Verbindungsachse (4, 32) verlaufen, wobei der Komplementärbereich (5, 34) und/oder die Aussparung (6, 35) zumindest in einem Abschnitt vorzugsweise konisch, kegelstumpfförmig und/oder pyramidenstumpfförmig ausgebildet ist.

4. Tragstruktur nach einem oder mehreren der vorherigen Ansprüche, **dadurch gekennzeichnet, dass** das Zugelement (23) eine sich in Richtung der ersten Verbindungsachse (4) erstreckende Zugstange (26) ist, die an einem ihrer beiden Enden einen am ersten Tragteil (2) anliegenden Kopf (27) und am anderen Ende eine aufgeschraubte und am zweiten Tragteil (3) anliegende Mutter (28) aufweist.

5. Tragstruktur nach dem vorherigen Anspruch 4, **dadurch gekennzeichnet, dass** der Kopf (27) im Inneren des ersten Tragteils (2) angeordnet ist, an einer Innenseite (16) des Komplementärbereichs (5) und/oder der Aussparung (6) anliegt und/oder im Längsschnitt eine zum Druckbereich (21) komplementäre, insbesondere konische, Form aufweist.

6. Tragstruktur nach einem der vorherigen Ansprüche 4 oder 5, **dadurch gekennzeichnet, dass** die Mutter (28) im Inneren des zweiten Tragteils (3) angeordnet ist und/oder an einer, insbesondere zur ersten Verbindungsachse (4) lotrechten oder im Querschnitt konischen, Stützwand (29) anliegt.

7. Tragstruktur nach einem oder mehreren der vorherigen Ansprüche 4 bis 6, **dadurch gekennzeichnet, dass** das erste und zweite Tragteil (2, 3) jeweils eine Zugangsöffnung (24, 25) aufweisen, so dass die Zugstange (26) über die erste Zugangsöffnung (24) in das erste Tragteil (2) einführbar und die Mutter (28) über die zweite Zugangsöffnung (25) angezogen und/oder gelöst werden kann.

8. Tragstruktur nach dem vorherigen Anspruch 6, **dadurch gekennzeichnet, dass** das erste und/oder zweite Tragteil (2, 3) in seinem Inneren zumindest ein Verstärkungselement (17, 18) aufweist, das innenseitig die Aussparung (6) und/oder die Stützwand (29) abstützt.

9. Tragstruktur nach einem oder mehreren der vorherigen Ansprüche, **dadurch gekennzeichnet, dass** das Druckelement (38) eine Schraubverbindung (39) ist, wobei vorzugsweise das dritte Tragteil (30) ein erstes Gewinde (40), insbesondere ein Außengewinde, aufweist, das in ein korrespondierendes zweites Gewinde (41), insbesondere ein Innengewinde, eines feststehenden anderen Tragteils (2, 32), insbesondere der Zugeinheit (22), eingeschraubt ist.

10. Tragstruktur nach einem oder mehreren der vorherigen Ansprüche, **dadurch gekennzeichnet, dass** die Aussparung (35) und der Komplementärbereich (34) der Druckeinheit (37) rotationssymmetrisch ausgebildet ist, so dass das dritte Tragteil (30) gegenüber dem feststehenden vierten Tragteil (31) zum lösbaren Verbinden verdrehbar ist.

11. Tragstruktur nach einem oder mehreren der vorherigen Ansprüche, **dadurch gekennzeichnet, dass** die Zugeinheit (22) und die Druckeinheit (37) zur Ausbildung der Tragstruktur (1) lösbar miteinander verbunden sind und/oder
die erste und zweite Verbindungsachse (4, 32) zueinander schräg verlaufen.

12. Tragstruktur nach dem vorherigen Anspruch 9, **dadurch gekennzeichnet, dass** das zweite Tragteil (3) der Zugeinheit (22) ein mit dem zweiten Gewinde (41) ausgebildetes Durchgangsloch (47) aufweist, in das das dritte Tragteil (30) der Druckeinheit (37) eingeschraubt ist.

13. Tragstruktur nach einem oder mehreren der vorherigen Ansprüche, **dadurch gekennzeichnet, dass** das vierte Tragteil (31) der Druckeinheit (37) mittelbar oder unmittelbar durch das erste Tragteil (2) der Zugeinheit (22) festgelegt ist, wobei vorzugsweise das erste und vierte Tragteil (2, 31) einteilig ausgebildet sind oder diese in einem Verbindungsbereich (44) lösbar ineinandergesteckt sind.

14. Tragstruktur nach dem vorherigen Anspruch 13, **dadurch gekennzeichnet, dass** das vierte Tragteil (31) über das Druckelement (38) im Verbindungsbereich (44) gegen das erste Tragteil (2) gedrückt ist und/oder dass der Verbindungsbereich (44) derart ausgebildet ist, dass das vierte Tragteil (31) gegenüber dem ersten Tragteil (2) drehfest ist.

15. Tragstruktur nach einem oder mehreren der vorherigen Ansprüche, **dadurch gekennzeichnet, dass** zumindest eines der Tragteile (2, 3; 30, 31) als Hohlbauteil und/oder aus einem isotropen und/oder anisotropen Material, insbesondere einem Faserkunststoffverbund und/oder Holz, ausgebildet ist.

## Claims

1. A support structure (1) for vehicles, particularly motor vehicles and/or aircraft, and/or civil works, particularly bridges and/or buildings, having at least two load-bearing parts (2, 3; 30, 31) inserted into each other in a form-fit manner along a connecting axis (4, 32),
one of the two load-bearing parts (3, 31) comprising a cutout (6, 35) having an opening (7, 36) and the other load-bearing part (2, 30) comprising a complementary region (5, 34) inserted into the cutout (6, 35), and
the support structure (1) comprising a connecting system (19) releasably connecting at least the two load-bearing parts (2, 3; 30, 31) to each other,
**characterized in that**
the connecting system (19) exerts a tensile and/or compressive force (20, 43) on at least one of the two load-bearing parts (2, 3; 30, 31) in the direction of the connecting axis (4, 32), so that the two load-bearing parts (2, 3; 30, 31) are pressed against each other in a common pressure region (21), and
the connecting system (19) comprises at least one compression element (38) acting in the direction of a second connecting axis (32) and disposed at least partially on a third load-bearing part (30) and pressing the same against a stationary fourth load-bearing part (31) of the support structure (1), so that said parts form a releasably connected compression unit (37),
and/or
that the connecting system (19) comprises at least one tensile element (23) acting in the direction of a first connecting axis (4) and pulling a first and second load-bearing part (2, 3) of the support structure (1) against each other, so that said parts form an integrally releasably connected tension unit (22),
wherein the complementary region (5) and the cutout (6) of the tension unit (22) is implemented in the shape of a truncated pyramid at least in one segment.

2. The support structure according to the preceding claim, **characterized in that** the pressure region (21) is implemented at least between a first contact surface (8) of the one load-bearing part (2, 30) and a second contact surface (9) of the other load-bearing part (3, 31), wherein the complementary region (5, 34) preferably comprises the first contact surface (8) and/or the cutout (6, 35) comprises the second contact surface (9).

3. The support structure according to the preceding claim 2, **characterized in that** the two corresponding contact surfaces (8, 9) run at an angle to the connecting axis (4, 32) in the longitudinal section, wherein the complementary region (5, 34) and/or the cutout (6, 35) is implemented preferably having a conical, pyramidal, and/or truncated pyramidal shape at least in one segment.

4. The support structure according to any one or more of the preceding claims, **characterized in that** the tensile element (23) is a tie rod (26) extending in the direction of the first connecting axis (4) and comprising a head (27) at one of the two ends thereof contacting the first load-bearing part (2) and a nut (28) threaded on the other end and contacting the second load-bearing part (3).

5. The support structure according to the preceding claim 4, **characterized in that** the head (27) is disposed in the interior of the first load-bearing part (2), contacts an inner side (16) of the complementary region (5) and/or the cutout (6) and/or comprises a longitudinal section shape complementary to the pressure region (21), particularly a conical shape.

6. The support structure according to any one of the preceding claims 4 or 5, **characterized in that** the nut (28) is disposed in the interior of the second load-bearing part (3) and/or contacts a support wall (29) particularly perpendicular to the first connecting axis (4) or having a conical cross section.

7. The support structure according to any one or more of the preceding claims 4 through 6, **characterized in that** the first and second load-bearing parts (2, 3) each comprise an access opening (24, 25) so that the tie rod (26) can be inserted into the first load-bearing part (2) by means of the first access opening (24) and the nut (28) can be tightened and/or loosened by means of the second access opening (25).

8. The support structure according to the preceding claim 6, **characterized in that** the first and/or second load-bearing part (2, 3) comprises at least one reinforcing element (17, 18) in the interior thereof, supporting the cutout (6) and/or the support wall (29) on the inner side.

9. The support structure according to any one or more of the preceding claims, **characterized in that** the compression element (38) is a threaded connection (39), wherein the third load-bearing part (30) preferably comprises a first thread (40), particularly an external thread, threaded into a corresponding second thread (41), particularly an internal thread, of a different, stationary load-bearing part (2, 32), particularly the tension unit (22).

10. The support structure according to any one or more of the preceding claims, **characterized in that** the cutout (35) and the complementary region (34) of the compression unit (37) are rotationally symmetrical in design, so that the third load-bearing part (30) can be rotated relative to the stationary fourth load-bearing part (31) for releasably connecting the same.

11. The support structure according to any one or more of the preceding claims, **characterized in that** the tension unit (22) and the compression unit (37) are releasably connected to each other for implementing the support structure (1), and/or
the first and second connecting axes (4, 32) run at an angle to each other.

12. The support structure according to the preceding claim 9, **characterized in that** the second load-bearing part (3) of the tension unit (22) comprises a through hole (47) implemented having the second thread (41) into which the third load-bearing part (30) of the compression unit (37) is threaded.

13. The support structure according to any one or more of the preceding claims, **characterized in that** the fourth load-bearing part (31) of the compression unit (37) is fixed directly or indirectly by the first load-bearing part (2) of the tension unit (22), wherein the first and fourth load-bearing parts (2, 31) are preferably implemented as a single part, or said parts are releasably inserted into each other in a connecting region (44).

14. The support structure according to the preceding claim 13, **characterized in that** the fourth load-bearing part (31) is pressed against the first load-bearing part (2) in the connecting region (44) by means of the compression element (38), and/or that the connecting region (44) is implemented such that the fourth load-bearing part (31) is rotationally fixed relative to the first load-bearing part (2).

15. The support structure according to any one or more of the preceding claims, **characterized in that** at least one of the load-bearing parts (2, 3; 30, 31) is implemented as a hollow component and/or made of an isotropic and/or anisotropic material, particularly of a fiber-plastic composite and/or of wood.

## Revendications

1. Structure porteuse (1) pour véhicules, en particulier pour véhicules à moteur et/ou aéronefs, et/ou constructions, en particulier pour ponts et/ou bâtiments, avec
au moins deux pièces porteuses (2, 3 ; 30, 31) qui sont insérées l'une dans l'autre par clabotage mécanique le long d'un axe de liaison (4, 32), dans laquelle l'une des deux pièces porteuses (3, 31) présente un évidement (6, 35) avec une ouverture (7, 36) et l'autre pièce porteuse (2, 30) présente une zone complémentaire (5, 34) insérée dans l'évidement (6, 35), et
la structure porteuse (1) présente un système de liaison (19) qui relie au moins les deux pièces porteuses (2, 3 ; 30, 31) de manière amovible,
**caractérisée en ce que**
le système de liaison (19) exerce une force de traction et/ou une force de pression (20, 43) sur au moins l'une des deux pièces porteuses (2, 3 ; 30, 31) dans la direction de l'axe de liaison (4, 32), de sorte que les deux pièces porteuses (2, 3 ; 30, 31) sont pressées l'une contre l'autre dans une zone de pression commune (21), et
**en ce que** le système de liaison (19) présente au moins un élément de pression (38) agissant dans la direction d'un deuxième axe de liaison (32), qui est disposé au moins partiellement sur une troisième pièce porteuse (30) et presse cette dernière contre une quatrième pièce porteuse stationnaire (31) de la structure porteuse (1), de sorte que celles-ci forment une unité de pression (37) reliée de manière amovible,
et/ou
**en ce que** le système de liaison (19) présente au moins un élément de traction (23) agissant dans la direction d'un premier axe de liaison (4), qui tire l'une vers l'autre une première et une deuxième pièces porteuses (2, 3) de la structure porteuse (1), de sorte que celles-ci forment une unité de traction (22) reliée de manière amovible,
dans laquelle la zone complémentaire (5) et l'évidemment (6) de l'unité de traction (22) se présentent sous forme pyramidale tronquée au moins dans une section.

2. Structure porteuse selon la revendication précédente, **caractérisée en ce que** la zone de pression (21) est formée au moins entre une première surface de butée (8) d'une pièce porteuse (2, 30) et une deuxième surface de butée (9) de l'autre pièce porteuse (3, 31), la zone complémentaire (5, 34) présentant de préférence la première surface de butée (8) et/ou l'évidement (6, 35) présentant la deuxième surface de butée (9).

3. Structure porteuse selon la revendication 2 précédente, **caractérisée en ce que** les deux surfaces de butée (8, 9) correspondant mutuellement s'étendent en coupe longitudinale obliquement par rapport à l'axe de liaison (4, 32), la zone complémentaire (5, 34) et/ou l'évidement (6, 35) se présentant de préférence sous forme conique, tronconique et/ou pyramidale tronquée au moins dans une section.

4. Structure porteuse selon l'une quelconque ou plusieurs des revendications précédentes, **caractérisée en ce que** l'élément de traction (23) est une barre de traction (26) s'étendant dans la direction du premier axe de liaison (4), qui comporte, à l'une de ses deux extrémités, une tête (27) prenant appui sur la première pièce porteuse (2) et, à l'autre extrémité, un écrou (28) vissé et prenant appui sur la deuxième pièce porteuse (3).

5. Structure porteuse selon la revendication 4 précédente, **caractérisée en ce que** la tête (27) est disposée à l'intérieur de la première pièce porteuse (2), s'appuie contre une face intérieure (16) de la zone complémentaire (5) et/ou de l'évidement (6) et/ou présente en coupe longitudinale une forme complémentaire à la zone de pression (21), en particulier conique.

6. Structure porteuse selon l'une quelconque des revendications 4 et 5 précédentes, **caractérisée en ce que** l'écrou (28) est disposé à l'intérieur de la deuxième pièce porteuse (3) et/ou s'appuie contre une paroi d'appui (29), en particulier perpendiculaire au premier axe de liaison (4) ou de section conique.

7. Structure porteuse selon l'une quelconque des revendications 4 à 6 précédentes, **caractérisée en ce que** la première et la deuxième pièces porteuses (2, 3) présentent chacune une ouverture d'accès (24, 25), de sorte que la barre de traction (26) peut être insérée dans la première pièce porteuse (2) via la première ouverture d'accès (24) et l'écrou (28) peut être serré et/ou desserré via la deuxième ouverture d'accès (25).

8. Structure porteuse selon la revendication 6 précédente, **caractérisée en ce que** la première et/ou la deuxième pièce(s) porteuse(s) (2, 3) comprend/comprennent à l'intérieur au moins un élément de renfort (17, 18) qui soutient à l'intérieur l'évidement (6) et/ou la paroi d'appui (29).

9. Structure porteuse selon l'une quelconque ou plusieurs des revendications précédentes, **caractérisée en ce que** l'élément de pression (38) est un assemblage vissé (39), dans laquelle, de préférence, la troisième pièce porteuse (30) présente un premier filetage (40), en particulier un filetage extérieur, qui est vissé dans un deuxième filetage correspondant (41), en particulier un filetage intérieur, d'une autre pièce porteuse (2, 32) stationnaire, en particulier de l'unité de traction (22).

10. Structure porteuse selon l'une quelconque ou plusieurs des revendications précédentes, **caractérisée en ce que** l'évidement (35) et la zone complémentaire (34) de l'unité de pression (37) se présentent sous une forme rotationnellement symétrique, de sorte que la troisième pièce porteuse (30) peut tourner par rapport à la quatrième pièce porteuse stationnaire (31) pour la liaison amovible.

11. Structure porteuse selon l'une quelconque ou plusieurs des revendications précédentes, **caractérisée en ce que** l'unité de traction (22) et l'unité de pression (37) sont reliées entre elles de manière amovible pour former la structure porteuse (1) et/ou
le premier et le deuxième axes de liaison (4, 32) s'étendent obliquement l'un par rapport à l'autre.

12. Structure porteuse selon la revendication 9 précédente, **caractérisée en ce que** la deuxième pièce porteuse (3) de l'unité de traction (22) présente un trou traversant (47) formé avec le deuxième filetage (41), dans lequel est vissé la troisième pièce porteuse (30) de l'unité de pression (37).

13. Structure porteuse selon l'une quelconque ou plusieurs des revendications précédentes, **caractérisée en ce que** la quatrième pièce porteuse (31) de l'unité de pression (37) est fixée indirectement ou directement par la première pièce porteuse (2) de l'unité de traction (22), dans laquelle, de préférence, la première et la quatrième pièces porteuses (2, 31) sont formées en une seule pièce ou celles-ci sont insérées l'une dans l'autre de manière amovible dans une zone de liaison (44).

14. Structure porteuse selon la revendication 13 précédente, **caractérisée en ce que** la quatrième pièce porteuse (31) est pressée contre la première pièce porteuse (2) par l'intermédiaire de l'élément de pression (38) dans la zone de liaison (44) et/ou **en ce que** la zone de liaison (44) se présente sous une forme telle que la quatrième pièce porteuse (31) soit fixe en rotation par rapport à la première pièce porteuse (2).

15. Structure porteuse selon l'une quelconque ou plusieurs des revendications précédentes, **caractérisée en ce que** l'une au moins des pièces porteuses (2, 3 ; 30, 31) est formée en tant que composant creux et/ou en un matériau isotrope et/ou anisotrope, en particulier un matériau composite de matière plastique renforcé par des fibres et/ou du bois.
